# EUROPÄISCHE PATENTSCHRIFT

(11) **EP 4 311 946 B1**
(45) Veröffentlichungstag und Bekanntmachung des Hinweises auf die Patenterteilung: **02.10.2024**
(21) Anmeldenummer: 22187498.5
(22) Anmeldetag: 28.07.2022
(51) Int. Cl.: F16B 5/06, B64F 1/305, F16B 2/04

(54) **KLEMMVORRICHTUNG ZUM MONTIEREN EINER BAHN AUS EINEM BIEGABREN MATERIAL**
CLAMPING DEVICE FOR MOUNTING A SHEET MADE OF A BENDABLE MATERIAL
DISPOSITIF DE SERRAGE PERMETTANT DE MONTER UN RAIL EN UNE MATIÈRE PLIABLE

(43) Veröffentlichungstag der Anmeldung: 31.01.2024
(73) Patentinhaber: Hübner GmbH & Co. KG, 34123 Kassel (DE)
(72) Erfinder: Riehn, Marcus, 37520 Osterode (DE); Grimm, Ralf, 34286 Spangenberg (DE); Gutkuhn, Detlef, 34314 Espenau (DE)

(56) Entgegenhaltungen:
- DE-A1- 4 113 725
- DE-C1- 3 439 921
- DE-U1- 202007 009 746
- US-A- 4 799 299

## Beschreibung

Die vorliegende Erfindung betrifft eine Klemmvorrichtung zum Montieren einer Bahn aus einem biegbarem Material, wobei die Klemmvorrichtung eine Kederschiene und einen Kederkörper umfasst, wobei die Kederschiene eine Führungsnut mit einem Klemmraum und einem Zuführschlitz aufweist, wobei der Kederkörper derart ausgestaltet ist, dass er aus einem Zuführzustand in einen verriegelten Zustand überführbar ist, wobei in dem Zuführzustand der Kederkörper in einer Zuführrichtung durch den Zuführschlitz in den Klemmraum zuführbar ist, und wobei die Führungsnut und der Kederkörper derart ausgestaltet sind, dass in dem verriegelten Zustand der Kederkörper den Klemmraum derart ausfüllt, dass der Kederkörper nicht durch den Zuführschlitz aus dem Klemmraum entnehmbar ist. Ferner weist die Klemmvorrichtung einen Kederkörper mit einer Spreiznut auf, wobei die Spreiznut derart in dem Kederkörper angeordnet ist, dass die Spreiznut den Kederkörper abschnittsweise in einen ersten und einen zweiten Klemmabschnitt teilt. Die Klemmvorrichtung weist weiterhin einen Spreizkörper auf, der in der Spreiznut angeordnet und zumindest in dem Zuführzustand des Kederkörpers gegenüber dem Kederkörper beweglich ist.

Die vorliegende Erfindung betrifft zudem ein System aus einer solchen Klemmvorrichtung und der Bahn aus dem flexiblen Material.

Weiterhin betrifft die vorliegende Erfindung einen Balg als Übergangsschutz für einen Übergang zwischen zwei beweglich miteinander verbundenen Wagenkästen eines mehrteiligen Fahrzeugs oder einen Balg für eine Fluggastbrücke mit einem solchen System.

Bei öffentlichen Transportmitteln wie Bussen und Bahnen, aber auch bei Fluggastbrücken, ist es üblich, den Übergang für die Passagiere zwischen zwei Wagenkästen, einer Fluggastbrücke und einem Flugzeug oder zwischen zwei Abschnitten einer Fluggastbrücke vor Wetter, Zugluft und anderen Umgebungseinflüssen zu schützen. Die dafür erforderlichen Bälge umschließen den Übergang zumindest im Bereich des Dachs und der einander gegenüberliegenden Seitenteile.

Der einzelne Balg ist dabei typischerweise zumindest im Bereich der Seitenteile aus einer Mehrzahl von Falten oder Wellen aus einem biegbarem bahnförmigen Material aufgebaut, sodass der Balg Relativbewegungen zwischen den Wagenkästen oder der Fluggastbrücke und dem Flugzeug oder zweier Abschnitte der Fluggastbrücke auszugleichen vermag.

Eine konstruktive Herausforderung ist dabei jeweils die Anbindung der Bahn aus dem biegbaren Material an starre Elemente des Balgs, des Übergangs, des Fahrzeugs oder der Fluggastbrücke. Ein besonderes Augenmerk liegt auf der Verbindung der Bahn aus dem biegbaren Material mit einem Verbindungselement des Balgs, welches dem Montieren des Balgs an einem Wagenkasten des mehrteiligen Fahrzeugs oder an einer Fluggastbrücke dient. Eine ähnliche Aufgabe liegt bei der Verbindung der Bahn mit einem Kuppelrahmen des Balgs vor, der dazu dient, den Balg mit einem zweiten, an einem anderen Wagenkasten oder einem anderen Brückenabschnitt montierten Balg zu verbinden.

Aus dem Stand der Technik sind Kederverbindungen zum Verbinden einer Bahn aus einem biegbaren Material mit einem starren Element bekannt. Diese beruhen darauf, dass ein Keder, der von der Bahn selbst oder einer Kombination aus der Bahn und einem Kederkörper gebildet ist, in einer Kederschiene formschlüssig aufgenommen ist. Dabei erstreckt sich die Bahn durch einen Schlitz aus der Kederschiene heraus, wobei der Schlitz so bemessen ist, dass der Keder nicht ohne weiteres durch den Schlitz entnehmbar ist. In der Regel wird der Keder von einem offenen Ende her in Längsrichtung in die Kederschiene eingeführt.

Die DE 34 39 921 C1 offenbart ein Element zum Verankern von mit diesem vereinigbaren Wandteilen aus verformbarem Flachmaterial oder aus festem Material in der hinterschnittenen, einen Öffnungsschlitz aufweisenden Längsnut eines Aufnahmeteils, in welche das Element einbringbar ist. Dabei ist die Stärke des Elements geringer bemessen ist als die Breite des Öffnungsschlitzes (9) der Längsnut (10), derart, dass das Element durch den Öffnungsschlitz hindurch in das Innere der Längsnut einführbar ist, und daß das Element nach dem Einschieben in die Längsnut eine solche Volumen- und Konturenveränderung aufweist, die ein Herausziehen des Elements aus der Längsnut quer zu deren Längserstreckung sicher verhindert.

Aus der EP 2 740 618 A1 sind jedoch Kederverbindungen bekannt, bei denen die Bahn um einen Kederkörper herumgelegt ist, wobei der Kederkörper elastisch verformbar ist, sodass der Kederkörper durch den Schlitz der Kederschiene in diese zuführbar ist. In einer solchen Variante wird der Schlitz der Kederschiene auch als Zuführschlitz bezeichnet, da die Zuführung der Bahn mit dem Kederkörper durch diesen Schlitz erfolgt. Durch seine Elastizität weitet sich der Kederkörper nach dem Passieren des Schlitzes in einem Klemmraum der Kederschiene wieder auf und kann dann nicht mehr oder nur mit überhöhten Kräften aus der Kederschiene entnommen werden.

Es hat sich gezeigt, dass während des Zuführens der Bahn mit dem Kederkörper durch den Zuführschlitz aufgrund der elastischen Verformung des Kederkörpers hohe Scherkräfte zwischen der um den Kederkörper herumgeführten Bahn und den Seitenwandflächen der Kederschiene im Bereich des Zuführschlitzes auftreten. Diese Scherkräfte können zu einer Beschädigung, zumindest aber zu einer Schwächung der Bahn führen.

Demgegenüber ist es Aufgabe der vorliegenden Erfindung, eine Klemmvorrichtung bereitzustellen, welche erhöhte, auf die Bahn einwirkende Kräfte beim Zuführen in die Kederschiene vermeidet.

Die zuvor genannte Aufgabe wird mit einer Klemmvorrichtung zum Montieren einer Bahn aus einem biegbaren Material gemäß dem unabhängigen Anspruch 1 der vorliegenden Anmeldung gelöst.

Dazu sind der Kederkörper mit der Spreiznut und der Spreizkörper derart ausgestaltet, dass bei einem Zuführen des Kederkörpers zusammen mit der Bahn durch den Zuführschlitz in den Klemmraum der Spreizkörper von der Bahn und einer Innenwandfläche der Führungsnut entgegen der Zuführrichtung in die Spreiznut gedrückt wird, sodass der Spreizkörper den ersten und den zweiten Klemmabschnitt derart auseinanderdrückt, dass der Kederkörper von dem Zuführzustand in den verriegelten Zustand übergeht.

Es ist die grundliegende Idee der vorliegenden Erfindung, den Kederkörper so auszugestalten, dass er zusammen mit der Bahn durch den Zuführschlitz in den Klemmraum der Kederschiene zuführbar ist ohne, dass übermäßige Scherkräfte von der Seitenwandfläche des Zuführschlitzes auf die Bahn ausgeübt werden. Bei dem oder nach dem Zuführen des Kederkörpers in die Führungsnut der Kederschiene wird der Spreizkörper tiefer in die Spreiznut eingeführt. Dabei drückt der Spreizkörper die beiden Klemmabschnitte des Kederkörpers so auseinander, dass der Kederkörper von dem Zuführzustand, in welchem er mit der Bahn durch den Zuführschlitz hindurchpasst, in den verriegelten Zustand übergeht. Im verriegelten Zustand ist der Kederkörper mit der ihn umgebenden Bahn nicht mehr zerstörungsfrei aus der Kederschiene entnehmbar.

Im Sinne der vorliegenden Anmeldung bezeichnet die Klemmvorrichtung die Vorrichtung mit der Gesamtheit der Elemente aus Kederschiene, Kederkörper und Spreizkörper, aber ohne die Bahn. Demgegenüber bezeichnet das System die Kombination aus der Klemmvorrichtung und der in ihr aufgenommenen Bahn.

Die Kederschiene im Sinne der vorliegenden Anmeldung ist dasjenige Element, welches beispielsweise an einem Rahmen eines Balgs, stationär aufgenommen ist. Die Kederschiene kann aber auch selbst Teil eines stationären Elements sein. Für die Kederschiene kommt es darauf an, dass diese eine Führungsnut definiert, wobei die Führungsnut einen Klemmraum und einen Zuführschlitz aufweist. Der Zuführschlitz bildet einen Hinterschnitt, in dem im verriegelten Zustand der Kederkörper mit der Bahn formschlüssig aufgenommen ist, sodass er nicht oder nur mit zerstörerisch wirkenden Kräften wieder durch den Zuführschlitz aus dem Klemmraum der Führungsnut entnehmbar ist.

Entscheidend für die Funktionalität eines Elements als Kederschiene ist die Ausgestaltung der Innenwandfläche der Führungsnut, sodass der Klemmraum und der Zuführschlitz ausgebildet werden. Man kann die Form der Führungsnut mit Klemmraum und Zuführschlitz als Ω-förmig oder hufeisenförmig beschreiben, unabhängig davon, ob die Innenwand der Führungsnut einen gekrümmten Verlauf oder einen polygonförmigen Verlauf aufweist.

Als Zuführrichtung im Sinne der vorliegenden Anmeldung wird diejenige Richtung bezeichnet, in der der Kederkörper mit der Bahn durch den Zuführschlitz in den Klemmraum eingeführt wird. Entscheidend für die Funktion der erfindungsgemäßen Klemmvorrichtung ist dabei, dass die Spreiznut entgegen der Zuführrichtung geöffnet ist. Auf diese Weise wird der Spreizkörper beim Zuführen des Kederkörpers mit der Bahn in den Klemmraum von der Bahn bzw. der Innenwandfläche der Führungsnut in die Spreiznut gedrückt. In einer Ausführungsform ist das System mit der Klemmvorrichtung und der Bahn daher selbstsichernd.

In einer Ausführungsform der Erfindung sind der Kederkörper mit der Spreiznut und der Spreizkörper derart ausgestaltet, dass dann, wenn der Spreizkörper maximal tief in die Spreiznut eingeschoben ist, der Spreizkörper in der Zuführrichtung über den Kederkörper bzw. die Klemmabschnitte des Spreizkörpers übersteht. Auf diese Weise wirkt ein Zug auf die Bahn zunächst primär auf den Spreizkörper und zieht diesen entgegen der Zuführrichtung in die Spreiznut hinein.

In einer Ausführungsform der Erfindung ist zumindest die Kederschiene oder der Kederkörper oder der Spreizkörper ein in einer Längsrichtung länglich ausgedehntes Profil. In einer Ausführungsform sind alle drei Elemente Kederschiene, Kederkörper und Spreizkörper in einer Längsrichtung länglich ausgedehnte Profile. Dabei wird als Längsrichtung im Sinne der vorliegenden Anmeldung die Richtung senkrecht zu einer Ebene, in der die Form der Führungsnut mit Klemmraum und Zuführschlitz als Ω-förmig oder hufeisenförmig beschrieben werden kann, bezeichnet.

In einer Ausführungsform der Erfindung ist in einer Schnittebene senkrecht zu der Längsrichtung der Kederschiene die Führungsnut derart ausgestaltet, dass sie gemessen in einer Querrichtung senkrecht zu der Zuführrichtung des Zuführschlitzes eine minimale Breite aufweist, die kleiner ist als eine maximale Breite des Klemmraums. Auf diese Weise definiert der Zuführschlitz eine Verjüngung und damit für den Kederkörper in dem verriegelten Zustand einen Hinterschnitt.

In einer Ausführungsform der Erfindung verläuft eine Außenwandfläche eines in dem Klemmraum aufgenommenen Abschnitts des Kederkörpers in dem verriegelten Zustand des Kederkörpers im Wesentlichen mit einem konstanten Abstand zu einer Innenwandfläche der Führungsnut. So ist zwischen der Innenwandfläche und der Außenwandfläche die Bahn aus dem flexiblen Material mit einer im Wesentlichen konstanten Dicke aufnehmbar. Ein konstanter Abstand der Außenwandfläche des Kederkörpers im Klemmraum ermöglicht einen guten Formschluss, ohne die Bahn punktuell hohen (Scher-)Kräften auszusetzen.

In einer alternativen Ausführungsform verläuft die Außenwandfläche des in dem Klemmraum aufgenommenen Abschnitts des Kederkörpers in dem verriegelten Zustand des Kederkörpers mit einem variierenden Abstand zu der Innenwandfläche der Führungsnut.

In einer Ausführungsform weist die Innenwandfläche der Führungsnut zumindest eine Ausnehmung auf. Die Bahn liegt in einer Ausführungsform in dem Bereich der Ausnehmung zwar an der Außenwandfläche des Kederkörpers, nicht aber an der Innenwandfläche der Führungsnut an. Eine solche Ausnehmung schafft Bauraum zum Aufnehmen eines zusätzlichen Funktionselements, beispielsweise eines Sensors oder eines Beleuchtungselements. Das Funktionselement ist in einer solchen Ausführungsform zwischen der Bahn und der Innenwandfläche der Führungsnut angeordnet.

In einer Ausführungsform verläuft eine Außenwandfläche eines in dem Zuführschlitz aufgenommenen Abschnitts des Kederkörpers in dem verriegelten Zustand des Kederkörpers im Wesentlichen mit einem konstanten Abstand zu einer Innenwandfläche des Zuführschlitzes. Auch im Bereich des Zuführschlitzes dient ein konstanter Abstand zwischen einer Außenwandfläche des Kederkörpers und einer Innenwandfläche des Zuführschlitzes der Vermeidung von punktuell auf die Bahn wirkenden Kräften. So kann eine Beschädigung vermieden werden.

In einer Ausführungsform der Erfindung verjüngt sich in einer Schnittebene senkrecht zu der Längsrichtung der Kederschiene die Spreiznut zu einem Nutgrund hin. Auf diese Weise lässt sich der Spreizkörper gut in die Spreiznut einführen und erzielt seine Spreizwirkung. Es versteht sich, dass in einer Ausführungsform auch der Spreizkörper selbst sich in der Richtung auf den Nutgrund der Spreiznut hin verjüngt. Auf diese Weise bildet der Spreizkörper einen Keil, der in die Spreiznut eingeführt wird.

In einer Ausführungsform der Erfindung weist der Kederkörper eine Kopfplatte auf. Die Kopfplatte erstreckt sich, wenn der Kederkörper in der Führungsnut aufgenommen und in seinem verriegelten Zustand ist, außerhalb der Führungsnut. Dabei weist die Kopfplatte in einer Schnittebene senkrecht zu einer Längsrichtung der Kederschiene und gemessen in einer Querrichtung senkrecht zu der Zuführrichtung eine maximale Breite auf, die größer ist als eine minimale Breite des Zuführschlitzes, wobei zwischen der Kopfplatte und der Kederschiene zwei Kopfspalte ausgebildet sind, durch die die Bahn hindurchführbar ist. Die Kopfplatte dient der Führung der Bahn beim Austritt aus der Kederschiene und schützt die Bahn in diesem Bereich.

In einer Ausführungsform der Erfindung sind, in dem verriegelten Zustand des Kederkörpers, der Spreizkörper und der Kederkörper derart zumindest reibschlüssig oder formschlüssig in Eingriff miteinander, dass der Spreizkörper nicht in der Zuführrichtung aus der Spreiznut herausrutscht. Eine solche Maßnahme dient dazu, den Kederkörper und mit ihm die Bahn dauerhaft in der Kederschiene zu sichern.

Die oben genannte Aufgabe wird zudem auch durch ein System mit einer Klemmvorrichtung gemäß einer Ausführungsform, so wie sie zuvor beschrieben wurde, und der Bahn aus dem flexiblen Material gelöst. Das System im Sinne der vorliegenden Anmeldung umfasst also die Klemmvorrichtung und die Bahn.

Als flexibles Material für die Bahn kommt üblicherweise eine Kombination aus einem Elastomer und einem Trägermaterial, insbesondere ein elastomerbeschichtetes Trägermaterial, zum Einsatz. Bei dem Trägermaterial kann es sich insbesondere um ein Textil handeln.

In einer Ausführungsform des erfindungsgemäßen Systems weist die Bahn eine Dicke auf. In einer Schnittebene senkrecht zu der Längsrichtung der Kederschiene weist der Zuführschlitz eine minimale Breite auf, wobei die minimale Breite in einer Querrichtung senkrecht zu der Zuführrichtung gemessen ist. Der Kederkörper weist einen in der Führungsnut aufzunehmenden Abschnitt aufweist, wobei der in der Führungsnut aufzunehmende Abschnitt in dem Zuführzustand eine maximale Breite aufweist und wobei die maximale Breite in einer Querrichtung senkrecht zu der Zuführrichtung gemessen ist. Die Dicke der Bahn, die minimale Breite des Zufuhrschlitzes und die maximale Breite des in der Führungsnut aufzunehmenden Abschnitts des Kederkörpers sind in einer solchen Ausführungsform derart gewählt, dass die Bahn und der Kederkörper im Wesentlichen ohne eine Verringerung der Dicke der Bahn, d.h. ohne eine Kompression der Bahn, in die Führungsnut einbringbar sind.

Eine solche Dimensionierung von Kederkörper, Führungsnut und Bahn ermöglicht ein Einführen der Kombination aus Kederkörper und Bahn in die Führungsnut mit einer weitgehenden Reduzierung von auf die Bahn einwirkenden Scherkräften. So kann eine Beschädigung der Bahn beim Einführen verhindert werden.

In einer Ausführungsform des erfindungsgemäßen Systems ist der Kederkörper in seinem verriegelten Zustand in der Führungsnut aufgenommen und die Bahn erstreckt sich in einem zwischen dem Kederkörper und der Kederschiene ausgebildeten Spalt in der Führungsnut.

In einer Ausführungsform des Systems ist der Kederkörper in seinem verriegelten Zustand zusammen mit der Bahn formschlüssig in der Führungsnut verriegelt. Dabei ist der Formschluss dadurch gegeben, dass der Zuführschlitz der Führungsnut einen Hinterschnitt für den in dem Klemmraum der Führungsnut aufgenommenen Abschnitt des Kederkörpers in seinem verriegelten Zustand bildet. Für den Formschluss ist es unerheblich, ob die Breite eines zwischen der Außenwandfläche des Kederkörpers und der Innenwandfläche der Führungsnut ausgebildete Spalt in etwa gleich der Dicke der Bahn ist, so dass zusätzlich ein Reibschuss zwischen Bahn und Kederkörper und zwischen Bahn und Innenwandfläche der Führungsnut gebildet ist, oder nicht.

Es versteht sich, dass eine solche Verriegelung einer Entnahme der Bahn mit dem Kederkörper entgegen der Zuführrichtung aus der Führungsnut entgegenwirkt.

In einer Ausführungsform des Systems weist die Bahn eine Dicke auf, wobei der Kederkörper mit der Spreiznut und der Spreizkörper derart ausgestaltet sind, dass der Spreizkörper bei einem Übergang des Spreizkörpers aus dem Zuführzustand in den verriegelten Zustand seine maximale Breite des Kederkörpers etwa um die Dicke der Bahn ändert.

In einer Ausführungsform der Erfindung ist die Kombination aus der in der Führungsnut aufgenommenen Bahn, dem in seinem verriegelten Zustand in der Führungsnut aufgenommenen Kederkörper und dem Spreizkörper selbstsichernd. D.h., wenn man versucht, den Kederkörper durch mechanische Beanspruchung, wie beispielsweise durch Zug an der Bahn, aus der Führungsnut herauszuziehen, drückt die Bahn den Spreizkörper in die Spreiznut hinein, was zu einer Spreizung des Kederkörpers führt. So kann eine Entnahme wirksam verhindert werden. Dadurch ergibt sich eine erhöhte Festigkeit des Systems, wodurch dieses höheren dynamischen Beanspruchungen gerecht werden kann.

In einer Ausführungsform des Systems sind die Führungsnut, der Kederkörper, der Spreizkörper und die Bahn so dimensioniert, dass bei einem Einführen des Kederkörpers mit der Bahn in die Führungsnut der Spreizkörper in die Spreiznut hineingedrückt wird. Insbesondere erfolgt in einer Ausführungsform das Drücken des Spreizkörpers in die Spreiznut durch einen Kontakt der Bahn mit der Innenwandfläche des Klemmraums, wobei die Bahn wiederum mit dem Spreizkörper in Kontakt ist, sodass bei einem weiteren Bewegen des Kederkörpers in der Zuführrichtung der Spreizkörper in der Spreiznut versenkt wird.

Die oben genannte Aufgabe wird zudem auch durch einen Balg als Übergangsschutz für einen Übergang zwischen zwei beweglich miteinander verbundenen Wagenkästen eines mehrteiligen Fahrzeugs oder für eine Fluggastbrücke mit einem System gemäß einer Ausführungsform, so wie sie zuvor beschrieben wurden, gelöst.

Weitere Vorteile Merkmale und Anwendungsmöglichkeiten der vorliegenden Erfindung werden anhand der folgenden Beschreibung von Ausführungsformen davon und der dazugehörigen Figuren deutlich. In den Figuren sind gleiche Elemente mit gleichen Bezugszeichen bezeichnet.
Figur 1 ist eine schematische Querschnittsansicht einer ersten Ausführungsform eines Systems aus einer Klemmvorrichtung und einer darin eingelegten und fixierten Bahn.
Figur 2 ist eine schematische Querschnittsansicht des Systems aus Figur 1 mit einer alternativen Führung der Bahn.
Figur 3 ist eine schematische Explosionsdarstellung des Systems aus den Figuren 1 und 2 in einer Querschnittsansicht.
Figur 4 ist eine schematische Explosionsdarstellung des Systems aus den Figuren 1 bis 3 in einer isometrischen Ansicht.
Figur 5 ist eine schematische Querschnittsansicht des Systems aus den Figuren 1 bis 4 beim Einführen des Kederkörpers mit dem Spreizkörper und der Bahn in die Kederschiene.
Figur 6 ist eine schematische Querschnittsansicht einer zweiten Ausführungsform eines Systems aus einer Klemmvorrichtung und einer darin aufgenommenen Bahn.
Figur 7 ist eine schematische Querschnittsansicht einer dritten Ausführungsform eines Systems aus einer Klemmvorrichtung und einer darin aufgenommenen Bahn.
Figur 8 ist eine schematische Querschnittsansicht einer vierten Ausführungsform eines Systems aus einer Klemmvorrichtung und einer darin aufgenommenen Bahn.
Figur 9 ist eine schematische Querschnittsansicht einer weiteren Ausführungsform eines Systems aus einer Klemmvorrichtung und einer darin aufgenommenen Bahn.
Figur 10 ist eine schematische Querschnittsansicht noch einer weiteren Ausführungsform eines Systems aus einer Klemmvorrichtung und einer darin aufgenommenen Bahn.

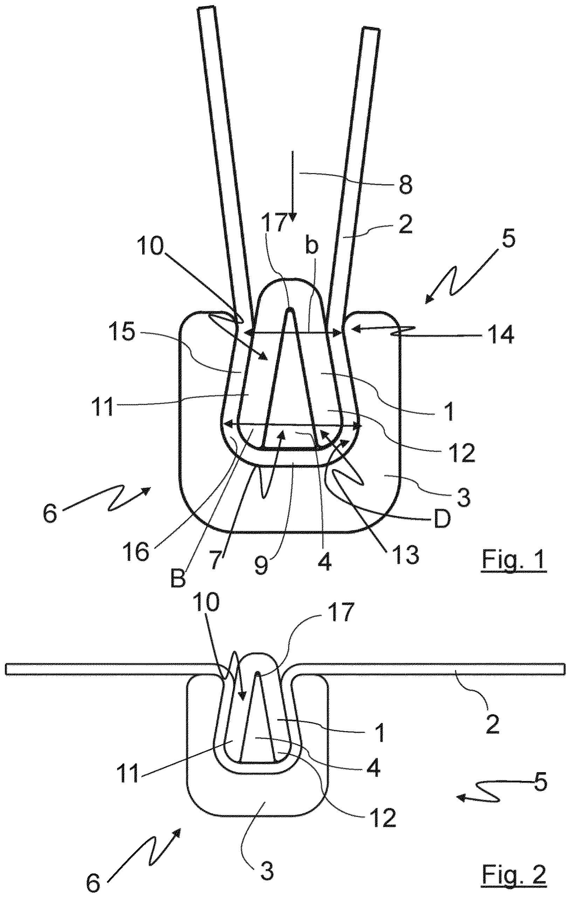

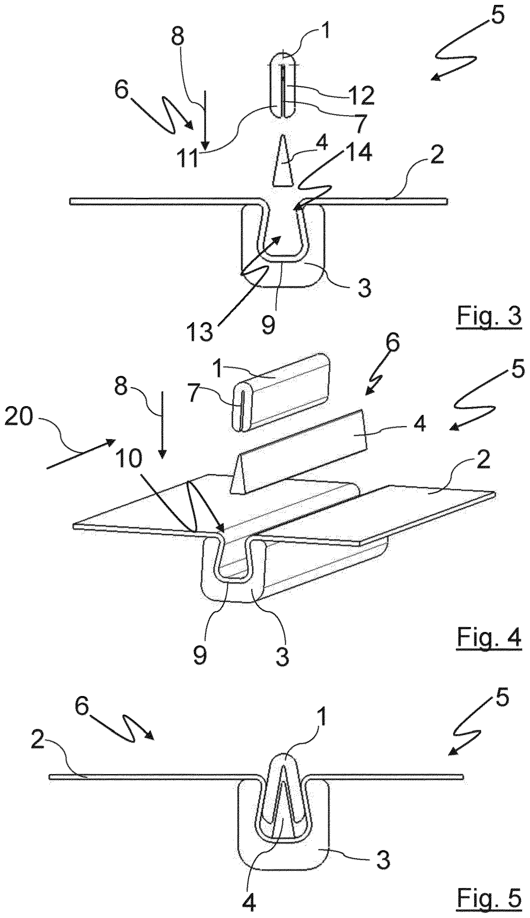

Alle Figuren 1 bis 10 stellen jeweils ein System 5 aus einer Klemmvorrichtung 6 und einer Bahn 2 aus einem biegbaren Material in einer Querschnittsansicht dar. Dabei sind die Schnittebenen der Querschnittsdarstellungen der Figuren 1 bis 3 und 5 bis 10 senkrecht zu einer Längsrichtung 20 der als längliche Profile ausgebildeten Elemente der Klemmvorrichtung 6. D.h. in einer Richtung senkrecht zur Querschnitts- oder Papierebene erstrecken sich die Elemente der Klemmvorrichtung 6 über eine Länge von mehreren Zentimetern bis hin zu mehreren Metern. Die Erstreckung der Profile in der Längsrichtung ist beispielhaft für die Ausführungsform der Klemmvorrichtung 6 aus den Figuren 1 bis 5 in der Figur 4 gezeigt.

Die Bahn 2 aus einem biegbaren Material besteht in allen dargestellten Ausführungsformen aus einem elastomerbeschichteten Textil.

Jede der Klemmvorrichtungen 6 umfasst eine Kederschiene 3 aus Aluminium sowie jeweils einen Kederkörper 1 und einen darin aufgenommenen Spreizkörper 4. Sowohl der Kederkörper 1 als auch der Spreizkörper 4 sind aus Kunststoff extrudierte Profile.

Jeder der Kederkörper 1 weist eine Spreiznut 7 auf, die sich entgegen der Zuführrichtung 8, d.h. vom Grund 9 der Führungsnut 10 her, in den Kederkörper 1 erstreckt. Die Spreiznut 7 dient der Aufnahme des Spreizkörpers 4. Die Spreiznut 7 teilt den Kederkörper 1 in einen ersten Klemmabschnitt 11 und einen zweiten Klemmabschnitt 12. Ist der Spreizkörper 4 in die Spreiznut 7 vollständig eingebracht, so verhindert der Spreizkörper 7 ein Zusammendrücken der Klemmabschnitte 11, 12 aufeinander zu und damit eine Verringerung der maximalen Breite des Kederkörpers 1. Dieser Zustand des Kederkörpers 1 wird als verriegelter Zustand bezeichnet. In diesem Zustand ist er nicht ohne Zerstörung zusammen mit der Bahn 2 aus der Führungsnut 10 entnehmbar. In den Figuren 1, 2 sowie 6 bis 10 ist der Kederkörper in seinem verriegelten Zustand dargestellt.

Aus den Darstellungen ist unmittelbar ersichtlich, dass das System aus der Klemmvorrichtung 6 und der Bahn 2 selbstsichernd ist. Zieht man in dem verriegelten Zustand des Kederkörpers 1 an der Bahn 2, so bewirkt die Bahn 2, dass der Spreizkörper 4 tiefer in die Spreiznut 7 hineingedrückt und damit die Aufspreizung der Klemmabschnitte 11, 12 manifestiert wird.

Entscheidend für die Verriegelung des Kederkörpers 1 in der Führungsnut 10 ist, dass die Führungsnut einen Klemmraum 13 und einen Zuführschlitz 14 aufweist. In den dargestellten Ausführungsformen gemäß den Figuren 1 bis 10 ist der Kederkörper 1 aus einem plastisch verformbaren Material gefertigt.

Das Einführen und Verriegeln des Kederkörpers 3 mit dem Spreizkörper 4 wird im Folgenden anhand der Darstellungen der Figuren 2 bis 5 beschrieben. Vor dem Einführen des Kederkörpers 1 in die Führungsnut 10 ist der Kederkörper in seinem Zuführzustand. Dieser Zuführzustand ist in den Figuren 3 und 4 gezeigt. Dabei wird bereits vor dem Zuführen des Kederkörpers 3 in die Führungsnut 10 der Spreizkörper 4 abschnittsweise in die Spreiznut 7 eingeführt.

Die beiden Klemmabschnitte 11, 12 haben im Zuführzustand eine maximale Breite, sodass der Kederkörper 1 entweder zusammen mit der Bahn 2 oder bei bereits in der Führungsnut 10 aufgenommener Bahn 2 durch den Zuführschlitz 14 geführt werden kann, ohne dass die Innenwandfläche 15 der Führungsnut 10 im Bereich des Zuführschlitzes 14 Scherkräfte auf die Bahn 2 ausübt. Solche Scherkräfte könnten nämlich die Bahn 2 beschädigen.

Es sind jedoch auch Varianten denkbar, in denen der Kederkörper 1 elastisch verformbar ist, wobei die Klemmabschnitte 11, 12 beim Einführen der Kombination aus Kederkörper 1, Spreizkörper 4 und Bahn 2 durch den Zuführschlitz 14 zusammengedrückt werden müssen. Auch in diesem Fall sind aber die auf die Bahn 2 wirkenden Kräfte reduziert, verglichen mit einem elastischen Kederkörper ohne Spreiznut.

Zwar ist auch im Zuführzustand bereits der Spreizkörper 4 in die Spreiznut 7 eingeführt, jedoch nur so weit, dass die beiden Klemmabschnitte 11, 12 und die Bahn 2 zusammen nicht breiter sind als die minimale Breite b des Zuführschlitzes 40. Die minimale Breite b ist, wie in den Figuren dargestellt, in einer Richtung senkrecht zur Zuführrichtung 8 und in der in den Figuren dargestellten Schnittebene senkrecht zur Längsrichtung der Kederschiene 3 gemessen.

Während des Zuführens des Kederkörpers 1 zusammen mit der Bahn 2 in der Zuführrichtung 8 durch den Zuführschlitz 14 in den Klemmraum 13 hinein wird dann, wenn die Bahn 2 den Nutgrund 9 der Führungsnut 10 erreicht, der mit der Bahn 2 in Kontakt befindliche Spreizkörper 4 weiter in die Spreiznut 7 hineingedrückt. Dieser Position ist schematisch in Figur 5 dargestellt. Dabei werden die Klemmabschnitte 11, 12 auseinandergedrückt und so der Kederkörper 1 in dem Klemmraum 13 gesichert. Der Kederkörper 1 kann nun den Zuführschlitz 14 nicht mehr passieren. Dieser final gesicherte Zustand, dieser wird auch als verriegelter Zustand bezeichnet, ist beispielsweise in Figur 2 gezeigt.

In den Ausführungsformen der Figuren 1 bis 5 sowie 8 bis 10 ist die Führungsnut 10 bzw. der Verlauf ihrer Innenwandfläche 15 und der Verlauf der Außenwandfläche 16 des Kederkörpers 1 so ausgebildet, dass im verriegelten Zustand des Kederkörpers 1 zwischen der Außenwandfläche 16 des Kederkörpers 1 und der Innenwandfläche 15 der Führungsnut 10 ein Spalt mit konstanter Breite D ausgebildet ist. In diesem ist die Bahn 2 mit einer im Wesentlichen konstanten Dicke aufgenommen. Dabei ist die Dicke der Bahn 2 in etwa gleich der Breite des Spalts.

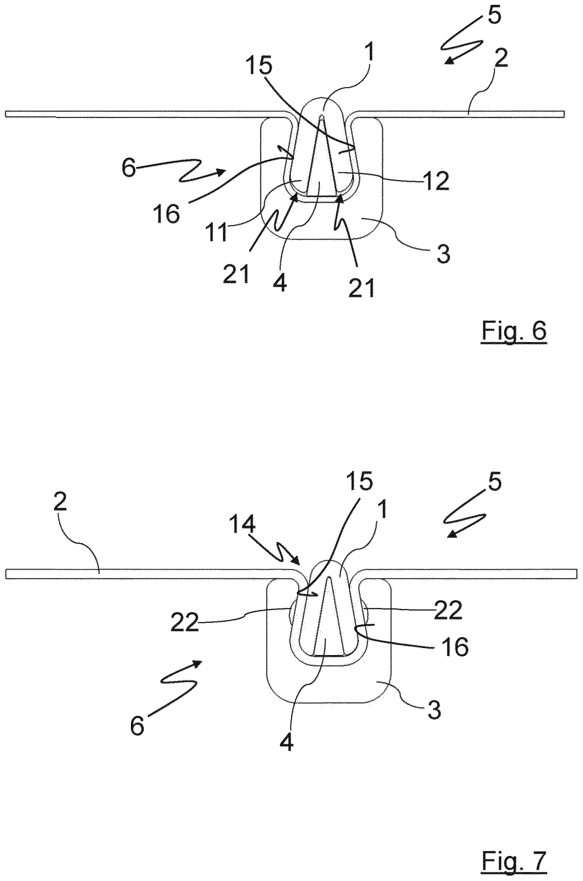

Davon abweichend zeigen die Figuren 6 und 7 zwei Ausführungsformen bei denen die Dicke des Spalts zwischen der Innenwandfläche 15 der Führungsnut 10 und der Außenwandfläche 16 des Kederkörpers 1 über den Verlauf des Spalts hinweg variiert.

Bei der Ausführungsform aus Figur 6 verbleibt auch im verriegelten Zustand des Kederkörpers 1 ein Abstand oder Luftraum 21 zwischen den Klemmabschnitten 11, 12 des Kederkörpers 1 und der Bahn 2. Der Spreizkörper 4 weist ein Übermaß gegenüber der Spreiznut 7 auf, so dass der Spreizkörper 4 auch im maximal in die Spreiznut 7 eingeschobenen Zustand aus der Spreiznut 7 herausragt. Auf diese Weise wirkt ein Zug auf die Bahn 2 unmittelbar auf den Spreizkörper 4 und treibt diesen entgegen der Zuführrichtung 8 tiefer in die Spreiznut 7 hinein.

In der in Figur 7 gezeigten Ausführungsform weist die Innenwandfläche 15 der Führungsnut kurz unterhalb des Zuführschlitzes 14 auf jeder Seite jeweils eine Ausnehmung 22 auf. Die Bahn liegt in diesem Bereich zwar an der Außenwandfläche 16 des Kederkörpers 1, nicht aber an der Innenwandfläche 15 der Führungsnut 10 an. In den Ausnehmungen 22 ist in einer nicht gezeigten Ausführungsform eine Effektbeleuchtung angeordnet.

In den Figuren aller Ausführungsformen ist deutlich erkennbar, dass sich die Spreiznut 7 entgegen der Zuführrichtung 8 zu einem Nutgrund 17 der Spreiznut 7 hin verjüngt. Entsprechend ist der Spreizkörper 4 dazu komplementär in einer Schnittebene senkrecht zur Längsrichtung 20 der Kederschiene 3 keilförmig ausgestaltet.

Die Ausführungsform der Figur 2 unterscheidet sich von der Ausführungsform aus Figuren 1 sowie 3 bis 5 nicht konstruktiv. Allerdings ist die Bahn 2 so aus der Führungsnut 10 herausgeführt, dass sie vor und nach der Klemmvorrichtung 6 im Wesentlichen in einer Ebene verläuft.

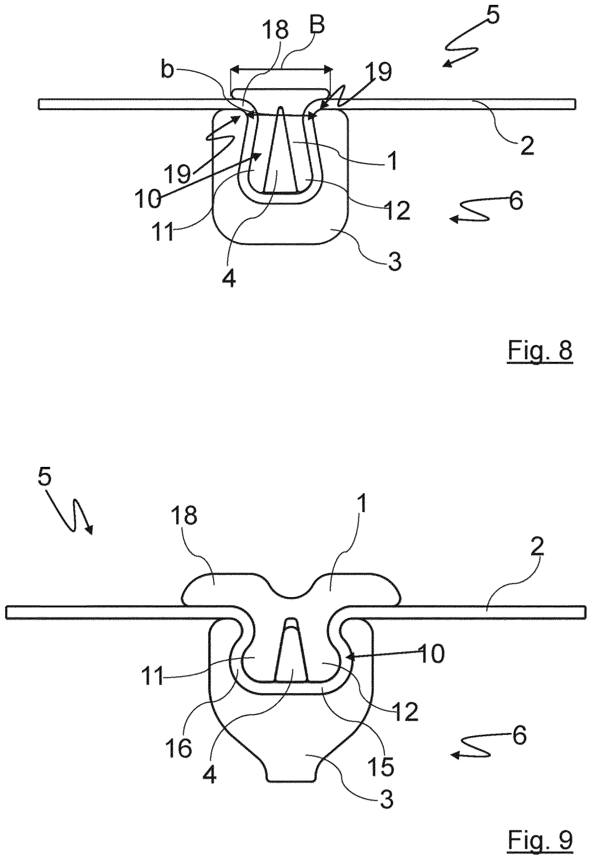

Die Ausführungsformen der Klemmvorrichtung 6 aus den Figuren 8 bis 10 unterscheiden sich von den Ausführungsformen aus den Figuren 1 bis 7 insbesondere dadurch, dass der Kederkörper 1 jeweils eine Kopfplatte 18 aufweist. Die Kopfplatte 18 erstreckt sich auch im verriegelten Zustand des Kederkörpers 1 außerhalb der Führungsnut 10. Dabei weist die Kopfplatte 18 in der in den Figuren dargestellten Schnittebene senkrecht zu der Längsrichtung der Kederschiene 3 eine maximale Breite B auf, die größer ist als die minimale Breite b des Zuführschlitzes 14. Die Kopfplatte 18 deckt somit die Führungsnut 10 ab. Zwischen der Kopfplatte 18 und der Kederschiene 3 werden zwei Kopfspalte 19 ausgebildet, durch die die Bahn 2 hindurchgeführt ist.

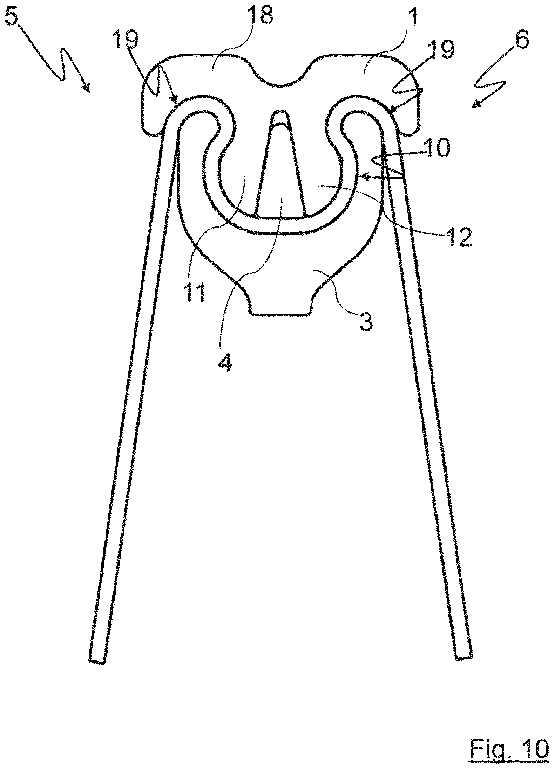

Die Ausführungsformen gemäß den Figuren 9 und 10 unterscheiden sich von den anderen Ausführungsformen auch dadurch, dass der Verlauf des Spalts zwischen der Außenwandfläche 16 des Kederkörpers 1 und der Innenwandfläche 15 der Führungsnut 10 der Kederschiene 3 geschwungener ist und an den griechischen Buchstaben Ω erinnert. Ein solcher Verlauf führt zu einer geringeren Krümmung der Bahn 2, wenn sie zwischen dem Kederkörper 1 in seinem verriegelten Zustand und der Kederschiene 3 eingelegt ist und damit zu geringeren Belastungsspitzen für die Bahn 2.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Beschreibung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Kederkörper
- 2: Bahn
- 3: Kederschiene
- 4: Spreizkörper
- 5: System
- 6: Klemmvorrichtung
- 7: Spreiznut
- 8: Zuführrichtung
- 9: Nutgrund
- 10: Führungsnut
- 11: Klemmabschnitt
- 12: Klemmabschnitt
- 13: Klemmraum
- 14: Zuführschlitz
- 15: Innenwandfläche
- 16: Außenwandfläche
- 17: Nutgrund
- 18: Kopfplatte
- 19: Kopfspalt
- 20: Längsrichtung
- 21: Luftraum
- 22: Ausnehmung

## Patentansprüche

1. Klemmvorrichtung (6) zum Montieren einer Bahn (2) aus einem biegbaren Material, wobei die Klemmvorrichtung (6) eine Kederschiene (3) und einen Kederkörper (1) umfasst,
wobei die Kederschiene (3) eine Führungsnut (10) mit einem Klemmraum (13) und einem Zuführschlitz (14) aufweist,
wobei der Kederkörper (1) derart ausgestaltet ist, dass er aus einem Zuführzustand in einen verriegelten Zustand überführbar ist, wobei in dem Zuführzustand der Kederkörper (1) in einer Zuführrichtung (8) durch den Zuführschlitz (14) in den Klemmraum (13) zuführbar ist,
wobei die Führungsnut (10) und der Kederkörper (1) derart ausgestaltet sind,
dass in dem verriegelten Zustand der Kederkörper (1) den Klemmraum (13) derart ausfüllt, dass der Kederkörper (1) nicht durch den Zuführschlitz (14) aus dem Klemmraum (13) entnehmbar ist,
wobei der Kederkörper (1) eine Spreiznut (7) aufweist, wobei die Spreiznut (7) derart in dem Kederkörper (1) angeordnet ist, dass die Spreiznut (7) den Kederkörper (1) abschnittsweise in einen ersten und einen zweiten Klemmabschnitt (12, 13) teilt,
wobei die Klemmvorrichtung (6) einen Spreizkörper (4) aufweist,
wobei der Spreizkörper (4) in der Spreiznut (7) angeordnet und zumindest in dem Zuführzustand des Kederkörpers (1) gegenüber dem Kederkörper (1) beweglich ist,
**dadurch gekennzeichnet, dass**
der Kederkörper (1) mit der Spreiznut (7) und der Spreizkörper (4) derart ausgestaltet sind, dass bei einem Zuführen des Kederkörpers (1) zusammen mit der Bahn (2) durch den Zuführschlitz (14) in den Klemmraum (13) der Spreizkörper (4) von der Bahn (2) und einer Innenwandfläche (15) der Führungsnut (10) entgegen der Zuführrichtung in die Spreiznut (7) gedrückt wird, so dass der Spreizkörper (4) den ersten und den zweiten Klemmabschnitt (12, 13) derart auseinanderdrückt, dass der Kederkörper (1) von dem Zuführzustand in den verriegelten Zustand übergeht.

2. Klemmvorrichtung (6) nach dem vorhergehenden Anspruch, wobei zumindest die Kederschiene (3) oder der Kederkörper (1) oder der Spreizkörper (4) ein in einer Längsrichtung länglich ausgedehntes Profil ist.

3. Klemmvorrichtung (6) nach einem der vorhergehenden Ansprüche, wobei in einer Schnittebene senkrecht zu einer Längsrichtung der Kederschiene (3) die Führungsnut (10) derart ausgestaltet ist, dass gemessen in einer Querrichtung senkrecht zu der Zuführrichtung (8) der Zuführschlitz (14) eine minimale Breite (b) aufweist, die kleiner ist als eine maximale Breite (B) des Klemmraums (13).

4. Klemmvorrichtung (6) nach einem der vorhergehenden Ansprüche, wobei eine Au-βenwandfläche (16) eines in dem Klemmraum (13) aufgenommenen Abschnitts des Kederkörpers (4) in dem verriegelten Zustand des Kederkörpers (4) im Wesentlichen mit einem konstanten Abstand zu der Innenwandfläche (15) der Führungsnut (10) verläuft, so dass zwischen der Innenwandfläche (15) und der Außenwandfläche (16) die Bahn (2) aus dem flexiblen Material mit einer im Wesentlichen konstanten Dicke (D) aufnehmbar ist.

5. Klemmvorrichtung (6) nach einem der vorhergehenden Ansprüche, wobei eine Au-βenwandfläche (16) eines in dem Zuführschlitz (14) aufgenommenen Abschnitts des Kederkörpers (4) in dem verriegelten Zustand des Kederkörpers (4) im Wesentlichen mit einem konstanten Abstand zu der Innenwandfläche (15) des Zuführschlitzes (14) verläuft.

6. Klemmvorrichtung (6) nach einem der vorhergehenden Ansprüche, wobei in einer Schnittebene senkrecht zu einer Längsrichtung der Kederschiene (3) die Spreiznut (7) sich zu einem Nutgrund (17) hin verjüngt.

7. Klemmvorrichtung (6) nach einem der vorhergehenden Ansprüche, wobei der Kederkörper (1) eine Kopfplatte (18) aufweist, die sich, wenn der Kederkörper (1) in der Führungsnut (10) aufgenommen und in seinem verriegelten Zustand ist, außerhalb der Führungsnut (10) erstreckt, wobei die Kopfplatte (18) in einer Schnittebene senkrecht zu einer Längsrichtung der Kederschiene (3) und gemessen in einer Querrichtung senkrecht zu der Zuführrichtung (8) eine maximale Breite aufweist, die größer ist als eine minimale Breite (b) des Zuführschlitzes (14), und wobei zwischen der Kopfplatte (18) und der Kederschiene (3) zwei Kopfspalte (19) ausgebildet sind, durch die die Bahn (2) hindurchführbar ist.

8. Klemmvorrichtung (6) nach einem der vorhergehenden Ansprüche, wobei in dem verriegelten Zustand des Kederkörpers (4) der Spreizkörper (4) und der Kederkörper (1) derart zumindest reibschlüssig oder formschlüssig in Eingriff miteinander sind, dass der Spreizkörper nicht in der Zuführrichtung aus der Spreiznut herausrutscht.

9. System (5) mit einer Klemmvorrichtung (6) nach einem der vorhergehenden Ansprüche und der Bahn (2) aus dem flexiblen Material.

10. System (5) nach dem vorhergehenden Anspruch,
wobei die Bahn (2) eine Dicke aufweist,
wobei in einer Schnittebene senkrecht zu einer Längsrichtung der Kederschiene (3) der Zuführschlitz (14) eine minimale Breite aufweist, wobei die minimale Breite in einer Querrichtung senkrecht zu der Zuführrichtung (8) gemessen ist,
wobei der Kederkörper (1) einen in der Führungsnut aufzunehmenden Abschnitt aufweist,
wobei der in der Führungsnut (10) aufzunehmenden Abschnitt in dem Zuführzustand eine maximale Breite aufweist, wobei die maximale Breite in einer Querrichtung senkrecht zu der Zuführrichtung (8) gemessen ist, und
wobei die Dicke der Bahn (2), die minimale Breite des Zuführschlitzes (14) und die maximale Breite des in der Führungsnut (10) aufzunehmenden Abschnitts so gewählt sind, dass die Bahn (2) und der Kederkörper (1) im Wesentlichen ohne eine Verringerung der Dicke der Bahn (2) in die Führungsnut (10) einbringbar sind.

11. System (5) nach Anspruch 9 oder 10, wobei der Kederkörper (1) in seinem verriegelten Zustand in der Führungsnut (10) aufgenommen ist und sich die Bahn (2) in einem zwischen dem Kederkörper (1) und der Kederschiene ausgebildeten Spalt in der Führungsnut (10) erstreckt.

12. System nach einem der Ansprüche 9 bis 11, wobei der Kederkörper (1) in seinem verriegelten Zustand zusammen mit der Bahn (2) formschlüssig in der Führungsnut (10) verriegelt ist.

13. System (5) nach einem der Ansprüche 9 bis 12, wobei die Bahn (2) eine Dicke (D) aufweist und wobei der Kederkörper (1) mit der Spreiznut (7) und der Spreizkörper (4) derart ausgestaltet sind, dass der Spreizkörper (4) beim Übergang des Kederkörpers (1) aus dem Zuführzustand in den verriegelten Zustand eine maximale Breite des Kederkörpers (1) etwa um die Dicke (D) der Bahn (2) ändert.

14. System (5) nach einem der Ansprüche 9 bis 13, wobei die in der Führungsnut (10) aufgenommene Bahn (2), der in seinem verriegelten Zustand in der Führungsnut (10) aufgenommene Kederkörper (1) und der Spreizkörper (4) selbstsichernd sind.

15. Verwendung von einem System nach einem der Ansprüche 9 bis 14 mit einem Balg als Übergangsschutz für einen Übergang zwischen zwei beweglich miteinander verbundenen Wagenkästen eines mehrteiligen Fahrzeugs oder für eine Fluggastbrücke.

## Claims

1. A clamping device (6) for mounting a sheet (2) made of a bendable material, the clamping device (6) comprising a keder rail (3) and a keder body (1),
the keder rail (3) having a guide groove (10) with a clamping space (13) and a supply slot (14),
the keder body (1) being designed such that it can be transferred from a supply state to a locked state, it being possible in the supply state for the keder body (1) to be fed into the clamping space (13) in a supply direction (8) through the supply slot (14),
the guide groove (10) and the keder body (1) being designed such that, in the locked state, the keder body (1) fills the clamping space (13) such that the keder body (1) cannot be removed from the clamping space (13) through the supply slot (14),
the keder body (1) having an expansion groove (7), the expansion groove (7) being arranged in the keder body (1) such that the expansion groove (7) sectionally divides the keder body (1) into a first and a second clamping portion (12, 13),
the clamping device (6) having an expansion body (4),
the expansion body (4) being arranged in the expansion groove (7) and being movable relative to the keder body (1) at least when the keder body (1) is in the supply state,
**characterized in that**
the keder body (1) with the expansion groove (7) and the expansion body (4) are designed such that when supplying the keder body (1) together with the sheet (2) through the supply slot (14) into the clamping space (13), the expansion body (4) is pressed into the expansion groove (7) by the sheet (2) and an inner wall surface (15) of the guide groove (10) opposite the supply direction so that the expansion body (4) presses the first and second clamping portions (12, 13) apart from each other such that the keder body (1) transitions from the supply state to the locked state.

2. The clamping device (6) according to the preceding claim, wherein at least the keder rail (3) or the keder body (1) or the expansion body (4) is a profile elongated in a longitudinal direction.

3. The clamping device (6) according to any one of the preceding claims, wherein in a sectional plane perpendicular to a longitudinal direction of the keder rail (3), the guide groove (10) is designed such that the supply slot (14) has a minimum width (b) measured in a transverse direction perpendicular to the supply direction (8) that is smaller than a maximum width (B) of the clamping space (13).

4. The clamping device (6) according to any one of the preceding claims, wherein an outer wall surface (16) of a portion of the keder body (4) accommodated in the clamping space (13) extends substantially at a constant distance from the inner wall surface (15) of the guide groove (10) when the keder body (4) is in the locked state such that the sheet (2) of flexible material can be accommodated between the inner wall surface (15) and the outer wall surface (16) with a substantially constant thickness (D).

5. The clamping device (6) according to any one of the preceding claims, wherein an outer wall surface (16) of a portion of the keder body (4) accommodated in the supply slot (14) extends substantially at a constant distance from the inner wall surface (15) of the supply slot (14) when the keder body (4) is in a locked state.

6. The clamping device (6) according to any one of the preceding claims, wherein the expansion groove (7) tapers toward a groove base (17) in a sectional plane perpendicular to a longitudinal direction of the keder rail (3).

7. The clamping device (6) according to any one of the preceding claims, wherein the keder body (1) has a head plate (18) which, when the keder body (1) is accommodated in the guide groove (10) and is in its locked state, extends outside the guide groove (10), wherein the head plate (18) has a maximum width in a sectional plane perpendicular to a longitudinal direction of the keder rail (3) and measured in a transverse direction perpendicular to the supply direction (8) that is greater than a minimum width (b) of the supply slot (14), and wherein two head gaps (19) are formed between the head plate (18) and the keder rail (3) through which the sheet (2) can pass.

8. The clamping device (6) according to any one of the preceding claims, wherein, when the keder body (4) is in a locked state, the expansion body (4) and the keder body (1) engage at least frictionally or positively with one another in such a way that the expansion body does not slip out of the expansion groove in the supply direction.

9. A system (5) with a clamping device (6) according to any one of the preceding claims, and the sheet (2) made of the flexible material.

10. The system (5) according to the preceding claim,
wherein the sheet (2) has a thickness,
wherein the supply slot (14) has a minimum width in a sectional plane perpendicular to a longitudinal direction of the keder rail (3), wherein the minimum width is measured in a transverse direction perpendicular to the supply direction (8),
wherein the keder body (1) has a portion to be accommodated in the guide groove,
wherein the portion to be accommodated in the guide groove (10) has a maximum width in the supply state, wherein the maximum width is measured in a transverse direction perpendicular to the supply direction (8), and
wherein the thickness of the sheet (2), the minimum width of the supply slot (14) and the maximum width of the portion to be accommodated in the guide groove (10) are selected such that the sheet (2) and the keder body (1) can be introduced into the guide groove (10) substantially without reducing the thickness of the sheet (2).

11. The system (5) according to either claim 9 or claim 10, wherein the keder body (1) is accommodated in the guide groove (10) in its locked state, and the sheet (2) extends in a gap in the guide groove (10) formed between the keder body (1) and the keder rail.

12. The system according to any one of claims 9 to 11, wherein, in its locked state, the keder body (1) is positively locked in the guide groove (10) together with the sheet (2).

13. The system (5) according to any one of claims 9 to 12, wherein the sheet (2) has a thickness (D), and wherein the keder body (1) with the expansion groove (7) and the expansion body (4) are designed such that the expansion body (4) changes a maximum width of the keder body (1) approximately by the thickness (D) of the sheet (2) in the transition of the keder body (1) from the supply state to the locked state.

14. The system (5) according to any one of claims 9 to 13, wherein the sheet (2) accommodated in the guide groove (10), the keder body (1) accommodated in its locked state in the guide groove (10) and the expansion body (4) are self-locking.

15. A use of a system according to any one of claims 9 to 14 with a bellows as gangway protection for a gangway between two wagon bodies movably connected to each other of a multi-part vehicle or for an air passenger bridge.

## Revendications

1. Dispositif de serrage (6) pour le montage d'une voie (2) en un matériau flexible, dans lequel le dispositif de serrage (6) comprend un rail à bourrelet (3) et un corps de bourrelet (1),
dans lequel le rail à bourrelet (3) présente une rainure de guidage (10) comportant un espace de serrage (13) et une fente d'amenée (14),
dans lequel le corps de bourrelet (1) est réalisé de telle sorte qu'il peut passer d'un état d'amenée à un état verrouillé, dans lequel le corps de bourrelet (1) peut, dans l'état d'amenée, être amené dans une direction d'amenée (8) à travers la fente d'amenée (14) dans l'espace de serrage (13),
dans lequel la rainure de guidage (10) et le corps de bourrelet (1) sont réalisés de telle sorte que, dans l'état verrouillé, le corps de bourrelet (1) remplit l'espace de serrage (13) de telle sorte que le corps de bourrelet (1) ne peut pas être retiré de l'espace de serrage (13) par la fente d'amenée (14),
dans lequel le corps de bourrelet (1) présente une rainure d'écartement (7), dans lequel la rainure d'écartement (7) est disposée dans le corps de bourrelet (1) de telle sorte que la rainure d'écartement (7) divise le corps de bourrelet (1) dans certaines sections en une première et une seconde section de serrage (12, 13),
dans lequel le dispositif de serrage (6) présente un corps d'écartement (4),
dans lequel le corps d'écartement (4) est disposé dans la rainure d'écartement (7) et est mobile par rapport au corps de bourrelet (1) au moins dans l'état d'amenée du corps de bourrelet (1),
**caractérisé en ce que**
le corps de bourrelet (1) comportant la rainure d'écartement (7) et le corps d'écartement (4) sont réalisés de telle sorte que, lors d'une amenée du corps de bourrelet (1) conjointement avec la voie (2) à travers la fente d'amenée (14) dans l'espace de serrage (13), le corps d'écartement (4) est pressé par la voie (2) et par une surface de paroi intérieure (15) de la rainure de guidage (10) dans la rainure d'écartement (7) à l'encontre de la direction d'amenée, de sorte que le corps d'écartement (4) éloigne la première et la seconde section de serrage (12, 13) de telle sorte que le corps de bourrelet (1) passe de l'état d'amenée à l'état verrouillé.

2. Dispositif de serrage (6) selon la revendication précédente, dans lequel au moins le rail à bourrelet (3) ou le corps de bourrelet (1) ou le corps d'écartement (4) est un profilé se prolongeant longitudinalement dans une direction longitudinale.

3. Dispositif de serrage (6) selon l'une des revendications précédentes, dans lequel, dans un plan de coupe perpendiculaire à une direction longitudinale du rail à bourrelet (3), la rainure de guidage (10) est réalisée de telle sorte que, mesurée dans une direction transversale perpendiculaire à la direction d'amenée (8), la fente d'amenée (14) présente une largeur minimale (b) qui est inférieure à une largeur maximale (B) de l'espace de serrage (13).

4. Dispositif de serrage (6) selon l'une des revendications précédentes, dans lequel une surface de paroi extérieure (16) d'une section du corps de bourrelet (4) reçue dans l'espace de serrage (13) s'étend, dans l'état verrouillé du corps de bourrelet (4), sensiblement à une distance constante de la surface de paroi intérieure (15) de la rainure de guidage (10), de sorte qu'entre la surface de paroi intérieure (15) et la surface de paroi extérieure (16), la voie (2) en matériau flexible peut être reçue avec une épaisseur (D) sensiblement constante.

5. Dispositif de serrage (6) selon l'une des revendications précédentes, dans lequel une surface de paroi extérieure (16) d'une section du corps de bourrelet (4) reçue dans la fente d'amenée (14) s'étend, dans l'état verrouillé du corps de bourrelet (4), sensiblement à une distance constante de la surface de paroi intérieure (15) de la fente d'amenée (14).

6. Dispositif de serrage (6) selon l'une des revendications précédentes, dans lequel, dans un plan de coupe perpendiculaire à une direction longitudinale du rail à bourrelet (3), la rainure d'écartement (7) se rétrécit en direction d'un fond de rainure (17).

7. Dispositif de serrage (6) selon l'une des revendications précédentes, dans lequel le corps de bourrelet (1) présente une plaque de tête (18) qui, lorsque le corps de bourrelet (1) est reçu dans la rainure de guidage (10) et est dans son état verrouillé, s'étend à l'extérieur de la rainure de guidage (10), dans lequel la plaque de tête (18) présente, dans un plan de coupe perpendiculaire à une direction longitudinale du rail à bourrelet (3) et mesurée dans une direction transversale perpendiculaire à la direction d'amenée (8), une largeur maximale qui est supérieure à une largeur minimale (b) de la fente d'amenée (14), et dans lequel deux entailles de tête (19) sont formées entre la plaque de tête (18) et le rail à bourrelet (3), à travers lesquelles la voie (2) peut être guidée.

8. Dispositif de serrage (6) selon l'une des revendications précédentes, dans lequel, dans l'état verrouillé du corps de bourrelet (4), le corps d'écartement (4) et le corps de bourrelet (1) sont en prise l'un avec l'autre au moins par friction ou par complémentarité de forme, de telle sorte que le corps d'écartement ne glisse pas hors de la rainure d'écartement dans la direction d'amenée.

9. Système (5) comportant un dispositif de serrage (6) selon l'une des revendications précédentes et la voie (2) en matériau flexible.

10. Système (5) selon la revendication précédente,
dans lequel la voie (2) présente une épaisseur,
dans lequel, dans un plan de coupe perpendiculaire à une direction longitudinale du rail à bourrelet (3), la fente d'amenée (14) présente une largeur minimale, dans lequel la largeur minimale est mesurée dans une direction transversale perpendiculaire à la direction d'amenée (8),
dans lequel le corps de bourrelet (1) présente une section destinée à être reçue dans la rainure de guidage,
dans lequel la section destinée à être reçue dans la rainure de guidage (10) présente, dans l'état d'amenée, une largeur maximale, dans lequel la largeur maximale est mesurée dans une direction transversale perpendiculaire à la direction d'amenée (8), et
dans lequel l'épaisseur de la voie (2), la largeur minimale de la fente d'amenée (14) et la largeur maximale de la section destinée à être reçue dans la rainure de guidage (10) sont choisies de manière à ce que la voie (2) et le corps de bourrelet (1) puissent être introduits dans la rainure de guidage (10) sensiblement sans réduction de l'épaisseur de la voie (2).

11. Système (5) selon la revendication 9 ou 10, dans lequel le corps de bourrelet (1) est reçu, dans son état verrouillé, dans la rainure de guidage (10) et la voie (2) s'étend dans une entaille formée entre le corps de bourrelet (1) et le rail à bourrelet dans la rainure de guidage (10).

12. Système selon l'une des revendications 9 à 11, dans lequel le corps de bourrelet (1), dans son état verrouillé, est verrouillé conjointement avec la voie (2) par complémentarité de forme dans la rainure de guidage (10).

13. Système (5) selon l'une des revendications 9 à 12, dans lequel la voie (2) présente une épaisseur (D) et dans lequel le corps d'écartement (4) et le corps de bourrelet (1) comportant la rainure d'écartement (7) sont réalisés de telle sorte que le corps d'écartement (4) modifie une largeur maximale du corps de bourrelet (1) d'environ l'épaisseur (D) de la voie (2) lors du passage du corps de bourrelet (1) de l'état d'amenée à l'état verrouillé.

14. Système (5) selon l'une des revendications 9 à 13, dans lequel la voie (2) reçue dans la rainure de guidage (10), le corps de bourrelet (1) reçu, dans son état verrouillé, dans la rainure de guidage (10) et le corps d'écartement (4) se bloquent automatiquement.

15. Utilisation d'un système selon l'une des revendications 9 à 14 comportant un soufflet comme blocage de passage pour un passage entre deux caisses de voiture reliées de manière mobile l'une à l'autre d'un véhicule en plusieurs parties ou pour une passerelle d'embarquement.
